# NEUE EUROPÄISCHE PATENTSCHRIFT

(11) **EP 2 026 952 B2**
(45) Veröffentlichungstag und Bekanntmachung des Hinweises auf die Entscheidung über den Einspruch: **23.09.2015**
(45) Hinweis auf die Patenterteilung: 29.09.2010
(21) Anmeldenummer: 07724571.0
(22) Anmeldetag: 25.04.2007
(51) Int. Cl.: B29C 67/00

(54) **VORRICHTUNG UND VERFAHREN ZUM SCHICHTWEISEN HERSTELLEN EINES DREIDIMENSIONALEN OBJEKTS AUS EINEM PULVERFÖRMIGEN AUFBAUMATERIAL**
DEVICE AND METHOD FOR THE LAYERED PRODUCTION OF A THREE-DIMENSIONAL OBJECT FROM A POWDERED CONSTITUENT
DISPOSITIF ET PROCÉDÉ DE FABRICATION D'UN OBJET EN TROIS DIMENSIONS PAR COUCHES À PARTIR D'UN MATÉRIAU DE CONSTRUCTION PULVÉRULENT

(30) Priorität: 18.05.2006 DE 102006023484
(43) Veröffentlichungstag der Anmeldung: 25.02.2009
(73) Patentinhaber: EOS GmbH Electro Optical Systems, 82152 Krailling (DE)
(72) Erfinder: WEIDINGER, Jochen, 81476 München (DE); MÜLLER, Frank, 81377 München (DE); PFEFFERKORN, Florian, 80689 München (DE)
(74) Vertreter: Hofer, Dorothea
(86) Internationale Anmeldenummer: PCT/EP2007/003641
(87) Internationale Veröffentlichungsnummer: WO 2007/134688

(56) Entgegenhaltungen:
- WO-A-01/41939
- WO-A-02/083323
- DE-C1- 19 514 740

## Beschreibung

Die Erfindung betrifft eine Vorrichtung und ein Verfahren zum schichtweisen Herstellen eines dreidimensionalen Objekts aus einem pulverförmigen Aufbaumaterial. Insbesondere betrifft die Erfindung ein Verfahren des selektiven Lasersinterns, nachfolgend kurz Lasersinterverfahren genannt, und eine Lasersintervorrichtung.

Ein Lasersinterverfahren und eine Lasersintervorrichtung nach dem Oberbegriff des Patentanspruchs 1 bzw. des Patentanspruchs 5 sind beispielsweise aus der DE 101 05 504 A1 bekannt. Bei dem Verfahren wird insbesondere ein Kunststoffpulver, wie z.B. Polyamid verwendet.

Bei dem bekannten Verfahren wird für einen Bauprozeß jeweils eine bestimmte Menge an Altpulver, d.h. Pulver, das als nichtgesintertes Pulver aus einem oder mehreren vorherigen Bauprozessen übrigbleibt, verwendet. Das Altpulver unterliegt jedoch einem Alterungsprozeß.

So ist das Altpulver thermisch und/oder thermooxidativ beschädigt und hat dadurch andere Materialeigenschaften und damit auch andere Verarbeitungsparameter als Neupulver. Daher kann es nur in bestimmten Anteilen dem Neupulver zugemischt werden, ohne den Bauprozeß und die Bauteilqualität zu gefährden. Die sogenannte Auffrischrate sind die Werte des prozentualen Anteils von Neupulver in der Mischmenge / prozentualem Anteil von Altpulver in der Mischmenge (z.B. 50/50) die für einen Bauprozeß eingesetzt wird. Diese soll möglichst klein sein, da dann Kosten für Neupulver eingespart werden können. In der DE 101 05 504 A1 wird vorgeschlagen, das Altpulver oder eine Mischung aus Altpulver und Neupulver vor dem Verfestigen vorzubehandeln, beispielsweise durch Fluidisieren, um die Wirkung von alterungsbedingten qualitätsmindernden Veränderungen zu reduzieren und damit mehr Altpulver zumischen zu können.

Durch eine derartige Vorbehandlung lassen sich jedoch in der Regel nicht alle alterungsbedingten qualitätsmindernden Veränderungen des Pulvers eliminieren. Insbesondere verursacht ein zu hoher Anteil an Altpulver eine unbefriedigende Oberflächenbeschaffenheit der äußeren Bauteilwände durch sogenannte Einfallstellen, die auch "sink marks" oder "orange peel" genannt werden.

Aus der WO 2005/097475 ist ein Lasersinterverfahren und ein Lasersinterpulver für ein solches Verfahren bekannt, bei dem versucht wird, das Problem der Einfallstellen dadurch zu lösen, daß ein bestimmtes Material verwendet wird, welches eine erhöhte Stabilität im Lasersinterprozeß hat und somit weniger alterungsbedingte Schäden aufweist, wenn es als Altpulver verwendet wird. Der Benutzer ist aber dann darauf angewiesen, dieses spezielle Pulver zu verwenden, welches wiederum andere Eigenschaften als das gewohnte bisher verwendete Pulver hat und möglicherweise nicht allen Anforderungen gerecht wird.

Es ist ferner aus der US 4,938,816 bekannt, beim Lasersintern das Pulver beim oder vor dem Verfestigen mit dem Laser mittels Erzeugen eines elektromagnetischen Feldes zu verdichten, um eine hohe Volumendichte zu erhalten.

Aus der EP 1 058 675 B1 ist es bekannt, beim Lasersintern von Keramikpulver eine aufgetragene Pulverschicht mittels einer Walze zu verdichten. Dadurch soll die Zeit verringert werden, die beim Sintern in der festen Phase des Keramikpulvers erforderlich ist.

Aus der DE 195 14 740 C1 ist eine Vorrichtung zum Lasersintern, insbesondere von Metallpulver bekannt, bei der das Pulver mittels einer Beschichterklinge aufgetragen wird. Die Klinge hat eine abgeschrägte Flanke an der Beschichtungskante, deren Winkel zwischen 30° und 90° liegt. An der gegenüberliegenden Glättkante ist ebenfalls eine abgeschrägte Fläche vorgesehen, die einen Winkel zwischen 1° und 60° aufweist. Die Glättkante glättet eine bereits verfestigte Schicht.

Eine gattungsgemäße Vorrichtung ist aus WO 01/41939 A1 bekannt.

Es ist Aufgabe der Erfindung, ein Verfahren und eine Vorrichtung zum Herstellen eines dreidimensionalen Objekts, insbesondere ein Lasersinterverfahren und eine Lasersintervorrichtung bereit zu stellen, mit dem bzw. mit der die Auffrischrate verringert werden kann und mit dem bzw. mit der die Kosten des Verfahrens reduziert werden können.

Die Aufgabe wird gelöst durch eine Vorrichtung nach Patentanspruch 1 und ein Verfahren nach Anspruch 7. Weiterbildungen der Erfindung sind in den Unteransprüchen angegeben. Das Verfahren weist den Vorteil auf, daß herkömmliches Pulver zum Lasersintern, wie z.B. Polyamid oder andere Stoffklassen, insbesondere Polyaryletheretherketon (PEEK), jeweils mit oder ohne Zusätzen wie Glaspartikeln, verstärkenden Fasern, metallische Zusätze, z.B. aluminiumgefülltes Polyamid und anderen verwendet werden können, dessen Eigenschaften hinlänglich bekannt sind. Mit dem Verfahren und mit der Vorrichtung kann ferner die Auffrischrate auf bis zu 0 % Neupulver (0/100) verringert werden.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Darstellung einer Lasersintervor- richtung; und
- Fig. 2: eine schematische perspektivische Seitenansicht des Pulverauftrags mit einem Beschichter in der Laser- sintervorrichtung;
- Fig. 3: eine schematische Darstellung des Querschnitts der Beschichterklinge des Beschichters; und
- Fig. 4: eine schematische teilgeschnittene perspektivische Ansicht, wie der Beschichter Pulver auf eine bereits gesinterte Schicht aufträgt.

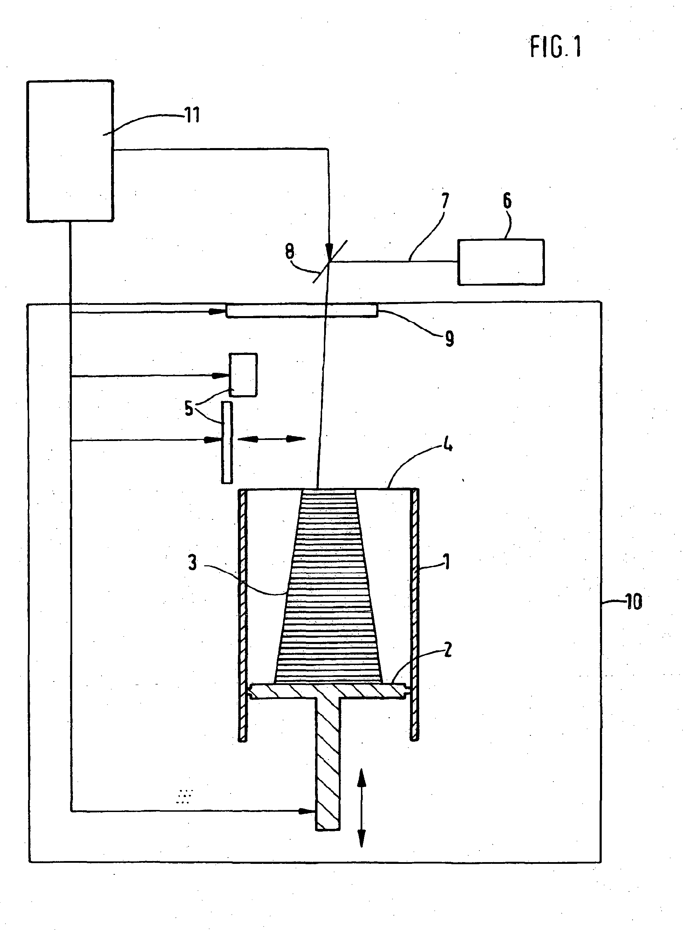

Die in Fig. 1 dargestellte Lasersintervorrichtung weist einen nach oben hin offenen Behälter 1 mit einem darin in vertikaler Richtung bewegbaren Träger 2 auf, der das zu bildende Objekt 3 trägt und ein Baufeld definiert. Der Träger 2 wird in vertikaler Richtung so eingestellt, dass die jeweils zu verfestigende Schicht des Objekts in einer Arbeitsebene 4 liegt. Weiter ist ein Beschichter 5 zum Aufbringen des durch elektromagnetische Strahlung verfestigbaren pulverförmigen Aufbaumaterials vorgesehen. Die Vorrichtung weist ferner einen Laser 6 auf. Der durch den Laser 6 erzeugte Laserstrahl 7 wird durch eine Ablenkeinrichtung 8 auf ein Einkoppelfenster 9 gelenkt und von diesem in die Prozesskammer 10 hindurch gelassen und in einem vorbestimmten Punkt in der Arbeitsebene 4 fokussiert.

Es ist ferner eine Steuereinheit 11 vorgesehen, über die die Bestandteile der Vorrichtung in koordinierter Weise zum Durchführen des Bauprozesses gesteuert werden.

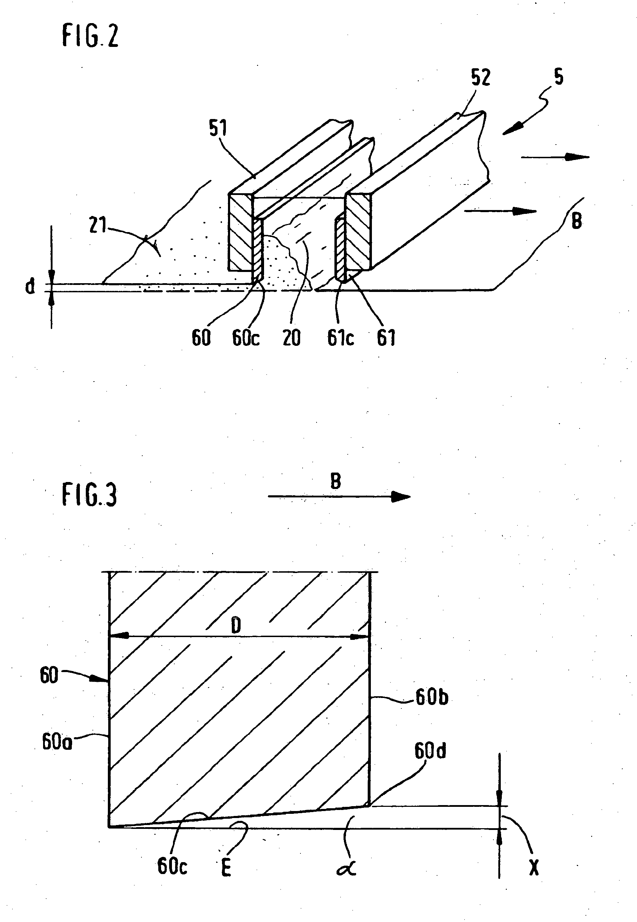

Der Beschichter 5 weist, wie in Fig. 2 gezeigt ist, zwei in einem Abstand zueinander und in einem Abstand oberhalb der Arbeitsebene angeordnete Backen 51, 52 auf, zwischen denen sich ein Pulvervorrat 20 befindet. Die Backen 51, 52 erstrecken sich über die gesamte Breite des Baufelds. An den einander zugewandten Innenseiten der Backen ist jeweils eine Klinge 60, 61 vorgesehen, die sich ebenfalls über die gesamte Baufeldbreite erstreckt und die an der Backe jeweils in Richtung der Arbeitsebene nach unten hervorsteht. Die Klingenunterseite weist von der Trägeroberfläche bzw. der zuletzt verfestigten Schicht einen Abstand d auf, der der Schichtdicke der gewünschten Schicht entspricht. In Fig. 2 ist die dargestellte momentane Verfahrrichtung des Beschichters 5 mit B angegeben.

Wie aus Fig. 3 ersichtlich ist, hat die Klinge in Verfahrrichtung B eine Dicke D und weist zwei sich im wesentlichen senkrecht zur Arbeitsebene 4 erstreckende und zueinander im wesentlichen parallel ausgerichtete Oberflächen 60a, 60b auf, die sich quer über das Baufeld erstrecken. An der der Arbeitsebene zugewandten Unterseite weist die Klinge eine schräge Fläche 60c auf, wobei die Klinge in dem Beschichter so angeordnet ist, daß die schräge Fläche 60c in Beschichtungsrichtung B ansteigt. Die schräge Fläche bildet eine Auftragsfläche. Sie schließt mit einer Fläche E, die parallel zur Arbeitsebene 4 bzw. zur Trägeroberfläche ist, einen spitzen Winkel α ein, der zwischen größer als 0° und etwa 5°, vorzugsweise bei etwa 2° liegt. Die untere Kante 60d zwischen der senkrechten Oberfläche 60b und der schrägen Klingenfläche 60c befindet sich auf einer Höhe x gegenüber der Ebene E. Bei einer Dicke D der Klinge von etwa 6mm ist die Höhe x größer als 0,03 und kleiner als etwa 0,5mm. Die Dicke der Klinge kann zwischen 1mm und 20mm betragen. Dadurch weist der Beschichter eine in der Beschichtungsrichtung B nur schwach angestellte Fläche 60c auf.

Die zweite Beschichterklinge 61 ist an der Innenseite der zweiten Backe 52 angeordnet und spiegelsymmetrisch zur ersten Beschichterklinge 60 ausgebildet. Die abgeschrägte Fläche 61c der zweiten Beschichterklinge 61 ist somit entgegen der Beschichtungsrichtung B, in der die erste Beschichterklinge 60 den Beschichtungsvorgang ausführt, angestellt. Damit ist es möglich, mit dem Beschichter jeweils bei der Hin- und bei der Rückfahrt eine neue Pulverschicht aufzutragen, und jeweils den Pulvervorrat mitzunehmen und ggf. zu ergänzen.

Im Betrieb wird als Pulver bevorzugt ein Kunststoffpulver, beispielsweise ein Polymerpulver wie Polyamid, insbesondere Polyamid 12, oder Pulver aus einer anderen Stoffklasse, wie z.B. PEEK, jeweils mit oder ohne Zusätzen, verwendet. Vor dem Beschichtungsvorgang wird Altpulver, welches als nichtgesintertes Pulver von einem oder von mehreren vorhergehenden Bauprozessen übrig bleibt, mit Neupulver gemischt. Die Auffrischrate beträgt z.B. bei ungefülltem Polyamid 50%-30% an Neupulver (Auffrischrate 50/50 bis 30/70) und bei gefülltem Polyamid 100%-70% an Neupulver (Auffrischrate 100/0 bis 70/30). Unter Neupulver wird ein Pulver verstanden, das bei keinem Herstellungsschritt zuvor verwendet wurde. Unter Altpulver wird ein Pulver verstanden, das sich zusammensetzt aus ca. 90% Pulver, das im Pulverkuchen miteingebaut wird und die gesamte Dauer des Bauprozesses unter hoher Temperatur lagert, und ca. 10% Pulver, das beim Schichtauftrag in Überlaufbehälter geschoben wurde.

Das Mischen kann außerhalb oder innerhalb der Lasersintervorrichtung erfolgen. Das Pulver wird vor jedem Beschichtungsvorgang in dem Beschichter 5 in einer solchen Menge zugeführt, die ausreicht, eine Schicht des Pulvers aufzutragen.

Anschließend fährt der Beschichter 5 über das Baufeld wobei die Beschichterklinge 60 eine Schicht 21 mit der vorbestimmten Dicke d aufbringt. Durch die in Beschichtungsrichtung B schräg angestellte Fläche 60c wird auf das zu verteilende Pulver, das sich in der vor der Beschichterklinge 60 befindlichen Pulversäule befindet, eine Kraft, die in die Arbeitsebene hineingerichtet ist, ausgeübt. Damit wird das Pulver 20 beim Aufbringen der Schicht komprimiert.

Anschließend wird mit dem Laserstrahl der Querschnitt des Objekts 3 in der jeweiligen Schicht bestrahlt und das Pulver somit verfestigt. Danach wird der Beschichter 5 wieder mit Pulver befüllt und wird in einer Richtung entgegen der in Fig. 2 und Fig. 3 gezeigten Richtung B bewegt. Dabei wirkt die zweite Beschichterklinge 62, die spiegelsymmetrisch zu der ersten Beschichterklinge 60 ausgebildet ist, als Beschichter und trägt eine neue Pulverschicht auf die zuletzt verfestigte Schicht bzw. das den verfestigten Bereich umgebende Pulver auf.

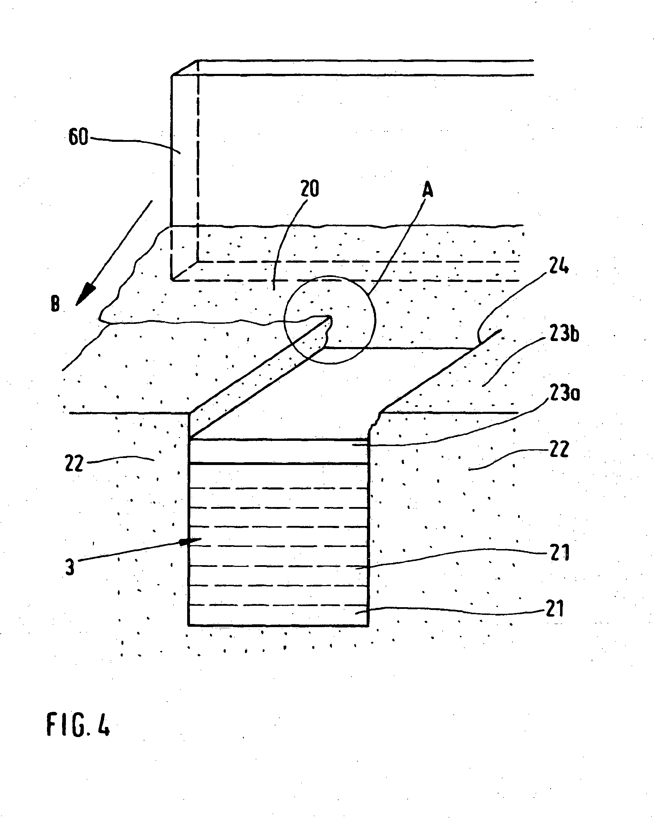

Die Fig. 4 erläutert schematisch den Betrieb der erfindungsgemäßen Klinge. Das Objekt 3 weist eine Mehrzahl von bereits verfestigten Schichten 21 und diese umgebendes nicht gesintertes Pulver 22 auf. Die zuletzt aufgetragene und verfestigte Schicht weist einen bereits verfestigten Abschnitt 23a und nicht gesintertes Pulver 23b auf. Da sich die Dichte beim Verfestigen erhöht, ist der bereits verfestigte Bereich 23a gegenüber dem Niveau des unverfestigten Pulvers 23b leicht abgesenkt. Dadurch entstehen Kanten 24 zwischen dem bereits verfestigten Abschnitt 23a und dem nicht verfestigten Bereich 23b.

Wenn die erfindungsgemäße Klinge 60 verwendet wird, hat sich überraschend gezeigt, daß ein Kompressionsdruck auf die Teilchen in der Schicht ausgeübt wird und es ,kaum oder keine Einfallstellen im fertigen Bauteil gibt.

Durch die Erhöhung der Pulverbettdichte ist es nicht nur möglich, die Auffrischrate zu verringern, sondern auch, ein Pulver zu verwenden, das bisher wegen seiner zu geringen Schmelzviskosität nicht oder nur bedingt für den Lasersinterprozeß geeignet ist.

Die Pulverbettdichte wird wie folgt gemessen. Ein geschlossenes hohles dünnwandiges quaderförmiges Lasersinter-Bauteil wird derart belichtet, daß das beim Belichten eingeschlossene Volumen den Wert 100mm x 100mm x 15mm in den Richtungen xyz hat. Das das Volumen umgebende Bauteil ist entsprechend zu dimensionieren. Das so gebaute Teil wird von außen von anhaftenden Pulverresten befreit und gewogen. Anschließend wird das Teil aufgeschnitten und das im Inneren befindliche Pulver entleert, sowie das leere Teil wieder gewogen. Die Differenz der Massen entspricht der Masse des eingeschlossenen Pulvervolumens. Da das Pulvervolumen bekannt ist, läßt sich daraus die Dichte des Pulverbetts berechnen.

Die folgende Tabelle stellt ein Ergebnis der erfindungsgemäßen Vorrichtung und des Verfahrens im Vergleich zum Stand der Technik dar. Als Lasersinterpulver wurde ein Polyamid 12, welches unter dem Handelsnamen PA 2200 (Sinterpulver der Anmelderin für EOSINT P Maschine) erhältlich ist, verwendet. Die aufgetragene Schichtdicke betrug 0,15mm:

| Alterungszustand des Pulvers %Neupulver/%Altpulver | Lösungsviskosität nach ISO 307 [η rel] | Mindestpulverbettdichte [g/cm³] | Klingengeometrie [Breite (mm)/Verdichtungshöhe (mm) Meßwerte bei einfacher Schräge |
|---|---|---|---|
| 50/50 | 2,1 | 0,4 | 6/0,08 |
| 25/75 | 2,35 | 0,41 | 6/0,15 |
| 0/100 | 2,6 | 0,43 | 6/0,3 |

Die Lösungsviskosität des Pulvers wurde nach ISO 307 bestimmt, die Pulverbettdichte nach dem oben beschriebenen Verfahren.

Mit dem Verfahren bzw. der Vorrichtung läßt sich der erforderliche Anteil an Neupulver reduzieren. Im besonderen Fall ist es sogar möglich, mit nahezu 100% Altpulver zu arbeiten. Ferner zeigt die Tabelle, daß die Lösungsviskosität, die ein Maß für die Schmelzviskosität des Materials ist, mit dem Anteil an Altpulver zunimmt. Daher ist es auch möglich, mit dem erfindungsgemäßen Verfahren auch Pulvermaterialien, die eine entsprechend hohe Schmelzviskosität haben und sich mit den bisherigen Verfahren und Vorrichtungen nicht verarbeiten ließen, zu sintern. Polyamid (PA), insbesondere PA 12 eignet sich vorteilhaft für die Vorrichtung und das Verfahren, da es durch einen Fällprozeß herstellbar ist und deshalb eine besonders glatte Oberfläche im Vergleich zu einem Mahlpulver hat. Daher können beim Beschichten in vorteilhafter Weise Setzprozesse stattfinden.

Die Beschichtergeometrie ist nicht auf das speziell gezeigte Ausführungsbeispiel beschränkt. So müssen z.B. die Oberflächen 60a, 60b nicht parallel sein, sondern es sind auch geformte Flächen nicht ausgeschlossen.

Die Steigung der Auftragsfläche muß nicht konstant sein, sondern kann anderweitig ansteigend sein, z.B. eine Schuppenform oder eine andere Form aufweisen.

Anstelle eines Lasers kann auch eine andere Energiequelle, die zur Verfestigung des pulverförmigen Materials geeignet ist, wie z.B. eine Elektronenstrahlquelle verwendet werden. Auch andere Arten des Energieeintrags sind möglich, wie z.B. Maskensintern, Inhibitionssintern oder ein linienförmiger Energieeintrag oder über ein Array.

## Patentansprüche

1. Vorrichtung zum Herstellen eines dreidimensionalen Objekts durch aufeinanderfolgendes Verfestigen von Schichten eines pulverförmigen Aufbaumaterials an den dem Querschnitt des Objekts in der jeweiligen Schicht entsprechenden Stellen durch Einwirkung eines Lasers oder einer anderen Energiequelle, mit einem Träger (2), auf dem das Objekt aufgebaut wird,
einem Beschichter (5) zum Aufbringen von Schichten des Pulvermaterials auf den Träger oder eine zuvor verfestigte Schicht, wobei der Beschichter in wenigstens einer Beschichtungsrichtung (B) über den Träger oder die zuvor verfestigte Schicht bewegbar ist,
einer Verfestigungseinrichtung (6) zum Verfestigen des Pulvermaterials an den dem Objekt in der jeweiligen Schicht entsprechenden Stellen,
**dadurch gekennzeichnet, dass**
der Beschichter (5) eine Klinge (60, 61) mit einer in Beschichtungsrichtung ansteigenden Auftragsfläche (60c, 61c) aufweist, wobei die Auftragsfläche an der dem Träger (2) *zu*gewandten Unterseite der Klinge vorgesehen ist und unter einem Winkel zwischen 0,7° und 2,8° in Bewegungsrichtung (B) des Beschichters ansteigt.

2. Vorrichtung nach Anspruch 1, **dadurch gekennzeichnet, dass** die Steigung der Fläche zwischen 0,01 und 0,06 liegt.

3. Vorrichtung nach Anspruch 1 oder 2, **dadurch gekennzeichnet, dass** die Breite der Auftragsfläche in Bewegungsrichtung zwischen 1 mm und 20 mm, vorzugsweise 6 mm beträgt.

4. Vorrichtung nach einem der Ansprüchen 1 bis 3, **dadurch gekennzeichnet, dass** die Höhe der Auftragsfläche größer als 0,03 mm und kleiner als 0,5 mm, vorzugsweise größer als 0,08 mm und kleiner als 5 mm ist.

5. Vorrichtung nach einem der Ansprüche 1 bis 4, **dadurch gekennzeichnet, dass** der Beschichter (5) zwei Klingen aufweist, die in einem Abstand zueinander angeordnet sind und die spiegelsymmetrisch zu einer Ebene senkrecht zur Bewegungsrichtung (B) des Beschichters ausgebildet sind.

6. Vorrichtung nach einem der Ansprüche 1 bis 5, **dadurch gekennzeichnet, dass** die Klinge symmetrisch ausgebildet ist und zwei Auftragsflachen hat.

7. Verfahren zum Herstellen eines dreidimensionalen Objekts durch aufeinanderfolgendes Verfestigen von Schichten eines pulverförmigen Aufbaumaterials an den dem Querschnitt des Objekts in der jeweiligen Schicht entsprechenden Stellen durch Einwirkung eines Lasers (6) oder einer anderen Energiequelle,
**dadurch gekennzeichnet, dass**
das Verfahren mit einer Vorrichtung nach einem der Ansprüche 1 bis 6 durchgeführt wird,
ein Pulver aus Polyamid 12 verwendet wird, das eine Lösungsviskosität η rel von größer als 2,1 hat, und
das Pulver beim Aufbringen einer Schicht mechanisch verfestigt wird.

8. Verfahren nach Anspruch 7, **dadurch gekennzeichnet, dass** bei der Verdichtung eine Pulverbettdichte von größer 0,38 g/cm³ erzeugt wird.

9. Verfahren nach Anspruch 7 oder 8, **dadurch gekennzeichnet, dass** eine Pulverbettdichte von größer als 0,4 g/cm³ und vorzugsweise von größer als 0,41 g/cm³, noch vorzugsweise größer als 0,42 erzeugt wird.

10. Verfahren nach einem der Ansprüche 7 bis 9, **dadurch gekennzeichnet, dass** die Lösungsviskosität η rel größer als 2,1, vorzugsweise größer als 2,3 und noch vorzugsweise größer als 2,6 ist.

11. Verfahren nach einem der Ansprüche 7 bis 10, **dadurch gekennzeichnet, dass** als pulverförmiges Aufbaumaterial ein Material verwendet wird, das Altpulver, welches als unverfestigtes Pulver beim Herstellen eines oder mehrerer zuvor gebildeten Objekt übrig geblieben ist, und einen Anteil Neupulver, das noch bei keinem Herstellverfahren zuvor verwendet wurde, aufweist.

12. Verfahren gemäß einem der Ansprüche 7 bis 11,
wobei als pulverförmiges Aufbaumaterial ein Material verwendet wird, das Altpulver, welches als unverfestigtes Pulver beim Herstellen eines oder mehrerer zuvor gebildeten Objekt übrig geblieben ist, und einen Anteil Neupulver, das noch bei keinem Herstellungsschritt zuvor verwendet wurde, enthält, wobei
das pulverförmige Aufbaumaterial beim Aufbringen einer Schicht mechanisch verdichtet wird und wobei der Anteil an Neupulver kleiner als 50% der gesamten für den Bauprozess eingesetzten Pulvermenge ist.

13. Verfahren nach einem der Ansprüche 7 bis 12, **dadurch gekennzeichnet, dass** das mit dem Verfahren hergestellte Objekt keine Einfallstellen aufweist.

## Claims

1. Device for manufacturing a three-dimensional object by a consecutively solidifying layers of a powdery building material at the locations corresponding to the cross-section of the object in the respective layers by impact of a laser or another energy source, comprising a support (2), on which the object is built,
an applicator (5) for applying layers of the powdery material onto the support or a previously solidified layer, wherein the applicator is movable at least in an application direction (B) above the support or the previously solidified layer,
a solidification device (6) for solidifying the powdery material at the locations corresponding to the object in the respective layers,
**characterized in that**
the applicator (5) comprises a blade (60, 61) having an application surface (60c, 61c) ascending in the application direction, wherein the application surface is provided at the lower side of the blade opposite to the support (2) and ascends in an angle between 0.7° and 2.8° in the moving direction (B) of the applicator.

2. Device according to claim 1, **characterized in that** the inclination of the surface is between 0.01 and 0.06.

3. Device according to claim 1 or 2, **characterized in that** the width of the application surface in the moving direction is between 1 mm and 20 mm, preferably 6 mm.

4. Device according to anyone of claims 1 to 3, **characterized in that** the height of the application surface is more than 0.03 mm and less than 0.5 mm, preferably more than 0.08 mm and less than 5 mm.

5. Device according to anyone of claims 1 to 4, **characterized in that** the applicator (5) comprises two blades, which are arranged with a clearance there between and which are mirror-symmetrically formed in a plane perpendicular to the moving direction (B) of the applicator.

6. Device according to anyone of claims 1 to 5, **characterized in that** the blade is symmetrically formed and has two application surfaces.

7. Method of manufacturing a three-dimensional object by consecutively solidifying layers of a powdery building material at the locations corresponding to the cross-section of the object in the respective layers by impact of a laser (6) or another energy source,
**characterized in that**
the method is conducted by a device according to anyone of claims 1 to 6,
a powder of polyamide 12 is used having a dissolution viscosity η rel of more than 2.1, and
wherein the powder is mechanically solidified by applying a layer.

8. Method according to claim 7, **characterized in that** a powder bed density of more than 0.38 g/cm³ is generated by compression.

9. Method according to anyone of claim 7 or 8, **characterized in that** a powder bed density of more than 0.4 g/cm³ and preferably of more than 0.41 g/cm³, and further preferred of more than 0.42 is generated.

10. Method according to anyone of claims 7 to 9, **characterized in that** the dissolution viscosity η rel is more than 2.1, preferably more than 2.3 and further preferred more than 2.6.

11. Method according to anyone of claims 7 to 10, **characterized in that** a material is used as the powdery building material, which comprises waste powder remained as non-solidified powder in manufacturing of one or more previously formed objects and a portion of fresh powder which has not previously been used in a manufacturing method.

12. Method according to anyone of claims 7 to 11,
wherein a material is used as the powdery building material, which comprises waste powder remained as non-solidified powder in manufacturing of one or several previously formed objects and a portion of fresh powder which has not previously been used in a manufacturing method, wherein
the powdery building material is mechanically compressed by applying a layer, and wherein the portion of fresh powder is less than 50% of the total powder amount used for the building process.

13. Method according to anyone of claims 7 to 12, **characterized in that** the object manufactured by the method has no sink marks.

## Revendications

1. Appareil pour la fabrication d'un objet tridimensionnel par solidification successive de couches d'un matériau structurant pulvérulent à des emplacements correspondant à la section de l'objet dans chaque couche, par l'action d'un laser ou d'une autre source d'énergie, comportant un support (2) sur lequel l'objet est structuré,
un applicateur (5) pour l'application de couches du matériau pulvérulent sur le support ou sur une couche préalablement solidifiée, ledit applicateur étant déplaçable dans au moins une direction de revêtement (B) au-dessus du support ou de la couche préalablement solidifiée,
un dispositif de solidification (6) pour la solidification du matériau pulvérulent à des emplacements correspondant à l'objet dans chaque couche,
**caractérisé**
**en ce que** l'applicateur (5) est pourvu d'une lame (60, 61) avec une surface d'application (60c, 61c) à inclinaison ascendante dans la direction de revêtement, ladite surface d'application étant prévue sur le côté inférieur de la lame opposé au support (2) et s'élevant dans la direction de déplacement (B) de l'applicateur en formant un angle compris entre 0,7° et 2,8°.

2. Appareil selon la revendication 1, **caractérisé en ce que** la pente de la surface est comprise entre 0,01 et 0,06.

3. Appareil selon la revendication 1 ou la revendication 2, **caractérisé en ce que** la largeur de la surface d'application dans la direction de déplacement est comprise entre 1 mm et 20 mm, et de préférence égale à 6 mm.

4. Appareil selon l'une des revendications 1 à 3, **caractérisé en ce que** la hauteur de la surface d'application est supérieure à 0,03 mm, et inférieure à 0,5 mm, de préférence supérieure à 0,08 mm, et inférieure à 5 mm.

5. Appareil selon l'une des revendications 1 à 4, **caractérisé en ce que** l'applicateur (5) est pourvu de deux lames disposées à intervalle l'une de l'autre et qui sont axialement symétriques par rapport à un plan perpendiculaire à la direction de déplacement (B) de l'applicateur.

6. Appareil selon l'une des revendications 1 à 5, **caractérisé en ce que** la lame est réalisée de manière symétrique et présente deux surfaces d'application.

7. Procédé de fabrication d'un objet tridimensionnel par solidification successive de couches d'un matériau structurant pulvérulent à des emplacements correspondant à la section de l'objet dans chaque couche, par l'action d'un laser (6) ou d'une autre source d'énergie,
**caractérisé**
**en ce que** le procédé est exécuté avec un appareil selon l'une des revendications 1 à 6
**en ce qu'**une poudre de polyamide 12 est utilisée, laquelle présente une viscosité en solution η rel supérieure à 2,1, et
**en ce que** la poudre est solidifiée mécaniquement à l'application d'une couche.

8. Procédé selon la revendication 7, **caractérisé en ce qu'**une densité de lit de poudre supérieure à 0,38 g/cm³ est générée lors de la compaction.

9. Procédé selon la revendication 7 ou la revendication 8, **caractérisé en ce qu'**une densité de lit de poudre supérieure à 0,4 g/cm³, avantageusement supérieure à 0,41 g/cm³ et de préférence supérieure à 0,42 g/cm³ est générée.

10. Procédé selon l'une des revendications 7 à 9, **caractérisé en ce que** la viscosité en solution η rel est supérieure à 2,1, avantageusement supérieure à 2,3 et de préférence supérieure à 2,6.

11. Procédé selon l'une des revendications 7 à 10, **caractérisé en ce que** un matériau utilisé comme matériau structurant pulvérulent comprend de la poudre usagée, en tant que reste de poudre non solidifiée lors de la fabrication d'un ou de plusieurs objets précédemment formés, et une part de poudre fraîche qui n'a été utilisée pour aucun processus de fabrication antérieur.

12. Procédé selon l'une des revendications 7 à 11,
dans lequel un matériau utilisé comme matériau structurant pulvérulent comprend de la poudre usagée, en tant que reste de poudre non solidifiée lors de la fabrication d'un ou de plusieurs objets précédemment formés, et une part de poudre fraîche qui n'a été utilisée pour aucune phase de fabrication antérieure, dans lequel
le matériau structurant pulvérulent est mécaniquement compacté à l'application d'une couche, et où la part de poudre fraîche est inférieure à 50 % de la quantité de poudre totale utilisée pour le processus de construction.

13. Procédé selon l'une des revendications 7 à 12, **caractérisé en ce que** l'objet fabriqué au moyen du procédé ne présente aucune dépression en surface.
